# EUROPEAN PATENT APPLICATION

(11) **EP 2 876 331 A1**
(43) Date of publication of application: **27.05.2015**
(21) Application number: 13820263.5
(22) Date of filing: 21.05.2013
(51) Int. Cl.: F16H 9/08, F01B 29/08, F01M 1/00

(54) **FORCE-ENHANCING MOTOR**

(30) Priority: 19.07.2012 MX 2012008446
(71) Applicant: Zamarron Aquino, Francisco Javier, 31300 Chihuahua (MX)
(72) Inventor: Zamarron Aquino, Francisco Javier, 31300 Chihuahua (MX)
(74) Representative: Carpintero Lopez, Francisco
(86) International application number: PCT/MX2013/000067
(87) International publication number: WO 2014/014333

(57) **Abstract**

The invention relates to a force-enhancing motor formed by an oil container (6) and an oil conveying system. The motor begins to operate by means of a plunger (5) that is pushed via a drive gear (3) and retracted via a spring (4). The drive gear is actuated by means of a pulley block (1) which transmits its force preferably with a chain (38) or a band. The plunger (5) draws oil from the container in order to convey the oil through flexible tubes (8) and through a plurality of check valves (7), so as to actuate at least one hydraulic piston which moves a transmission (18) by means of a shaft (17). Said transmission comprises a main cone (25) and a secondary cone (30), which are actuated by means of a reverse gear and a direct gear.

## Description

### SUBJECT MATTER OF THE INVENTION

Providing motion to vehicles, machines, electrical generators, as it acts as a motor using much less energy or effort than that used by all currently existing motors. A further objective is to multiply the force of motors using any energy source, whether electric, wind, photovoltaic, internal combustion or human.

### BACKGROUND OF THE INVENTION

It is currently common to use electric, hydraulic or internal combustion motors to generate mechanical movement in vehicles or various machines. Such motors are limited with regard to the power generated, using an amount of energy for such operation; in the case of internal combustion engines a large amount of polluting gases is also generated in the combustion, as well as using non-renewable resources in their operation. The present invention is meant to offer greater mechanical power with a reduced use of resources, as it enhances the force of any of the aforementioned motors, thereby reducing fuel use by up to 90% and consequently also reducing pollutant emissions.

### BRIEF DESCRIPTION OF THE FIGURES

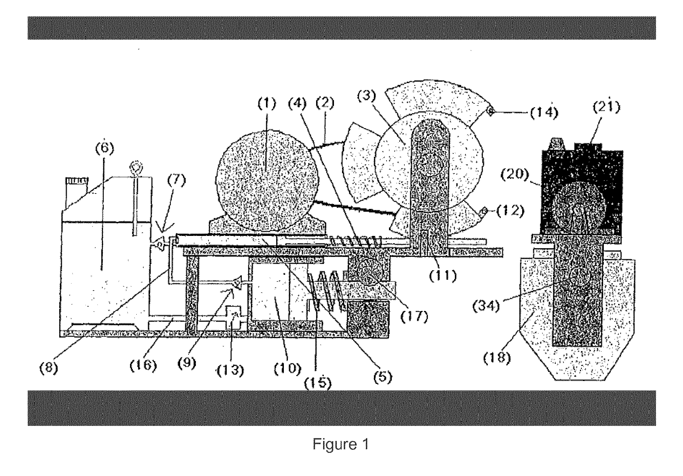

Figure 1 is a side view of the force enhancing motor showing all the parts thereof.
Figure 2 is a top view of the union of the pistons and the transmission.
Figure 3 is a side inner view of the transmission showing all the parts thereof.

### DETAILED DESCRIPTION OF THE INVENTION

The invention relates to a motor that can operate equally using human power (such as with pedals), an electric motor (fed by a rechargeable battery) or a gasoline motor. This device can be used to move automobiles, electric generators, conveyor belts, etc., reducing fuel use and pollutant emissions by up to 100% (as up to 90% less fuel is used, consequently reducing by the same proportion greenhouse gas emissions). This motor relies on basic physics, employing the principles of simple machines.

The force enhancer begins operating when the plunger (5) suctions oil from the container (6) to fill the hydraulic system ducts, when the plunger spring (4) retracts said plunger (5), the oil is suctioned and made to pass through the primary check valve (7), which only allows the oil to enter the plunger (5). When the oil ducts have been filled with oil the plunger (5) is pushed by a drive gear (3) that is driven by the force of an electric hoist (1) connected to the drive gear (3) by a belt or chain (2). When said drive gear (3) is activated it drives the plunger (5) which causes the oil to flow, ejecting it from the container and leading it to the main piston (10) through the hose (8) and passing through the secondary check valve (9), which only allows the entry of oil to the main piston (10), and prevents it from returning, at this point multiplying the force supplied to the system. This force can be varied by the combination of the hoist (1) capacity, the diameters and lengths of the plungers and the main pistons.

The drive gear (3) has a plurality of teeth or drive areas. In this embodiment there are three drive areas and two short free spaces to allow the plunger (5) from retracting, and one long space when a cycle is completed to allow the recovery of the plunger (5) and the main piston (10) pushed by the corresponding spring (15). In this design, due to the volumes of the plunger (5), the main piston (10) and the lengths thereof, it is necessary to actuate the plunger (5) three times to obtain the full stroke of the main piston (10). These dimensions can be different according to the force requirements.

The drive gear (3) is provided with an electronic sensor (11) that upon reading the primary signal (12) located at the start of the long space opens the electronic valve (13) located between the main piston (10) and the container (6) in the return hose (16), allowing oil to exit the main piston (10) and return to the container (6). Upon reading the secondary signal (14) located at the end of the long space, the electronic valve (13) is closed, assuming its normal position, such that it is ready to restart the cycle.

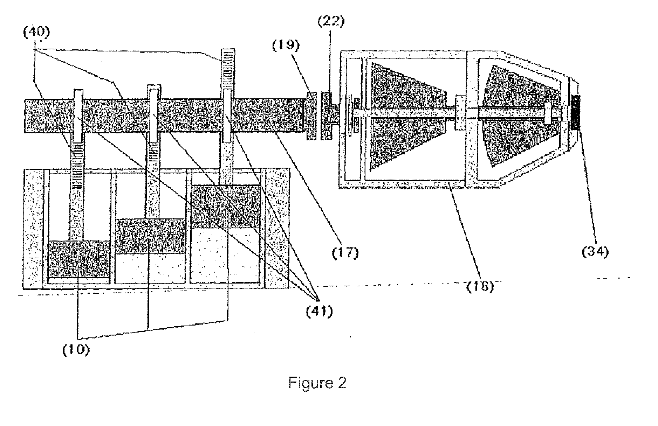

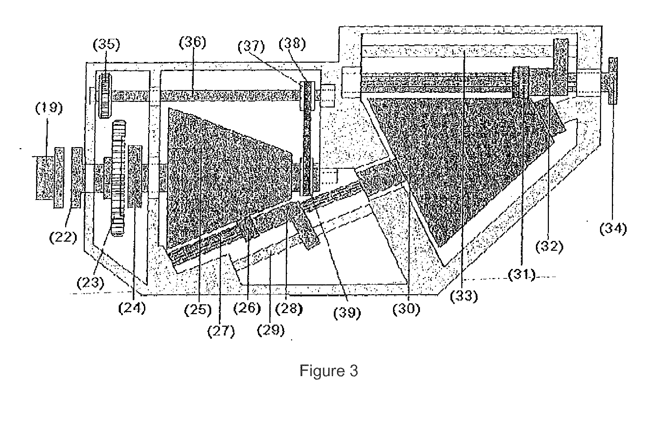

The main piston (10) pushes a shaft (17) as shown in Figure 2 (top view of union of pistons and transmission) through a rack (40) that only pushes and returns freely when the main piston (10) is retracted, due to the features of the gears (41), the shaft (17) has a shaft union (19) joining it to the primary union of the transmission (22). The transmission (18) is shown in figure 3 (inner side view of the transmission) showing the neutral gear (23) when there is no contact with either the direct gear (24) or reverse gear (35). When the neutral gear (23) engages the direct gear (24) the primary cone (25) is set in motion, turning the primary contactor (26) which can slide along the face of the primary cone (25) about the shaft (27) thereof using the primary contactor pusher (28). When sliding on the pusher guide (29) the primary contactor (26) transmits its motion to the secondary cone (30) through the shaft (27), the secondary cone (30) and the shaft (27) forming a single body, when the primary contactor (26) slides on the face of the primary cone (25) the speed of the secondary cone (30) is increased or decreased. The secondary contactor (31) by means of its secondary contactor pusher (32) with its own secondary pusher guide (33) also slides on the face of the secondary cone (30) to increase or decrease the speed of the final connector (34) where the equipment that will operate with this power enhancer is connected. Immediately before the end of the end connector (34) is a belt that transmits movement to the alternator (20) which supplies power to the battery (21), which delivers the power to the electric motor that drives the hoist (1), as the neutral gear (23) engages the reverse gear (35) sending the movement through the shaft (36) to the pulley (37) and through the chain (38) to the front pulley (39) of the primary cone, sets in motion the primary cone (25) and this moves the entire transmission (18) in the opposite sense.

Having described my invention sufficiently, I consider it to be novel and therefore claim as my exclusive property the contents of the following clauses:

## Claims

1. Force enhancing motor **characterised in that** it consists in an oil container and an oil duct system, said motor beginning to operate by means of a plunger that is driven by a drive gear and retracted by a spring, wherein the drive gear is actuated by an electric hoist that transmits its force preferably through a chain or belt, said plunger suctioning oil from the container to send the oil through hoses and making it pass through a plurality of check valves, such that the hydraulic force thereof actuates at least one piston that moves a transmission through a shaft, the transmission comprising a main cone and a secondary cone that are actuated by a reverse gear and a direct gear; said power enhancer motor can vary in force by the combination of the hoist capacity and the diameters and lengths of the main plungers and pistons.

2. Force enhancing motor according to claim 1, **characterised in that** the drive gear is provided with a plurality of drive teeth or areas (7), leaving short free spaces between said drive teeth or areas to allow the plunger to retract and at least one space to allow recovery after completing a cycle and thereby allow the recovery of the main piston and the plunger.

3. Force enhancing motor according to claim 2 **characterised in that** the drive gear is provided with an electronic sensor which upon detection of the signals placed at the start of the long space opens an electronic valve allowing oil to return to the container, and upon detection of the signal placed at the end of the long space when a cycle is completed closes the electronic valve to restart the cycle.

4. Force enhancing motor according to claim 1, **characterised in that** it comprises a dual cone transmission in charge of transmitting the force to the mechanism to be moved through an end shaft.

5. Force enhancing motor according to claim 4 **characterised in that** a pulley and belt are provided at the end of the end shaft to move an alternator that supplies power to the electric battery.
